# EUROPÄISCHE PATENTSCHRIFT

(11) **EP 3 859 462 B1**
(45) Veröffentlichungstag und Bekanntmachung des Hinweises auf die Patenterteilung: **05.03.2025**
(21) Anmeldenummer: 21154049.7
(22) Anmeldetag: 28.01.2021
(51) Int. Cl.: G05B 19/042, G05B 9/02, G05B 19/4062, G05B 19/409, B66F 9/075

(54) **MOBILE BAUMASCHINE UND VERFAHREN ZUR STEUERUNG EINER MOBILEN BAUMASCHINE**
MOBILE CONSTRUCTION MACHINE AND METHOD FOR CONTROLLING A MOBILE CONSTRUCTION MACHINE
MACHINE MOBILE DE CONSTRUCTION ET PROCÉDÉ DE COMMANDE D'UNE MACHINE MOBILE DE CONSTRUCTION

(30) Priorität: 30.01.2020 DE 102020102210
(43) Veröffentlichungstag der Anmeldung: 04.08.2021
(73) Patentinhaber: Stetter GMBH, 87700 Memmingen (DE)
(72) Erfinder: Berger, Thomas, 87452 Altusried (DE); Schmidt, Wolfgang, 88444 Ummendorf (DE); Schuster, Dieter, 87740 Buxheim (DE); Garber, Roland, 87700 Memmingen (DE)
(74) Vertreter: Schneiders & Behrendt Bochum

(56) Entgegenhaltungen:
- DE-A1- 102015 013 147
- US-A1- 2014 059 263
- US-A1- 2019 308 856

## Beschreibung

Die Erfindung betrifft eine mobile Baumaschine mit wenigstens einer Kommunikationsschnittstelle zur Kommunikation mit einem mobilen Eingabegerät zur benutzerseitigen Eingabe von Benutzerbefehlen zur Bedienung der Baumaschine, und wenigstens einer Steuereinheit zur Umsetzung der über das Eingabegerät eingegebenen und über die Kommunikationsschnittstelle kommunizierten Benutzerbefehle in Ansteuerungssignale für Maschinenkomponenten der Baumaschine, sowie ein Verfahren zur Steuerung einer mobilen Baumaschine.

Die US 2019/0308856 A1 betrifft ein Transportsystem mit mehreren Robotereinheiten zur Kommunikation mit einem Fernbedienungsgerät und mit einem Lenkungsmodul mit einem Empfänger, um Steuersignale vom Fernbedienungsgerät zu empfangen oder Rückmeldungen an das Fernbedienungsgerät zu senden.

Die US 2014/0059263 A1 betrifft eine Dockingstation, die eine Verbindung zwischen einem mobilen Gerät und der Dockingstation über NFC ermöglicht. Die Docking-Station verwendet NFC, um das mobile Gerät zu identifizieren und zu authentifizieren.

Die DE 10 2015 013 147 A1 offenbart ein Maschinenbedienungsassistenzsystem mit einer auf einem Mobilgerät anzeigbaren Mensch-Maschine-Schnittstelle und Näherungsmeldern, welche an eine mit dem Mobilgerät ausführbare Steuerung melden, wenn der Benutzer des Mobilgeräts ein um eine Maschine herum angeordnetes Bedienfeld betritt oder verlässt. Die Näherungsmelder können hierzu einen Sender umfassen, der zum Anbringen an der entsprechenden Maschine ausgebildet sein kann und eine Bedienfeldkennung sendet. Dabei können die Sender als Bedienfeldkennung eine eindeutige Identifikationsnummer aussenden, wobei das Erfassen der Identifikationsnummer durch die Mobilgeräte als Signal zum Freigeben der Maschinendaten verwendet werden kann.

Bei der Auslegung der Steuerung einer mobilen Baumaschine, beispielsweise eines Fahrmischers, mit einem mobilen Eingabegerät, beispielsweise einem Smartphone oder einem Tablet, auf dem ein Programm (App) zur Steuerung der mobilen Maschine installiert ist, sind Sicherheitsaspekte zu beachten, insbesondere die relevanten Vorschriften, wie z.B. in Form der Maschinenrichtlinie.

Die Maschinenrichtlinie (Richtlinie 2006/42/EG) schreibt insbesondere vor, dass Steuerungen und Befehlseinrichtungen von Maschinen so zu konzipieren sind, dass es nicht zu Gefährdungssituationen kommt, und zwar weder im Falle von Defekten der verwendeten Hard- oder Software, noch bei Fehlern in der Logik des verwendeten Steuerkreises, noch bei vorhersehbaren Bedienungsfehlern. Die Maschine darf nicht unbeabsichtigt in Gang gesetzt werden können. Das Stillsetzen der Maschine darf nicht verhindert werden können. Ausdrücklich schreibt die Maschinenrichtlinie bei drahtloser Steuerung vor, dass ein automatisches Stillsetzen der Maschine ausgelöst werden muss, wenn keine einwandfreien Steuersignale empfangen werden oder die Verbindung abbricht.

Weiter enthält die Maschinenrichtlinie Vorgaben zum Stillsetzen der Maschine. So muss jede Bedienungseinrichtung, d.h. grundsätzlich auch ein zur Bedienung verwendetes mobiles Eingabegerät, mit einer Befehlseinrichtung zum Stillsetzen einzelner oder bestimmter Funktionen der Maschine - je nach Gefährdungslage - aufweisen. Zum Stillsetzen im Notfall muss insbesondere jede Maschine mit einem oder mehreren Not-Halt-Befehlsgeräten (Not-Halt-Taster) ausgerüstet sein, durch die eine unmittelbare drohende oder bereits eintretende Gefahr vermieden werden kann. Das Not-Halt-Befehlsgerät bringt den gefährlichen Vorgang, z.B. die Drehbewegung der Mischertrommel bei einem Fahrmischer, möglichst schnell zum Stillstand, ggf. müssen zusätzlich bestimmte Sicherungsbewegungen ausgelöst werden. Wichtig ist dabei, dass die durch das Not-Halt-Befehlsgerät ausgelöste Funktion jederzeit verfügbar und betriebsbereit sein muss. Hier ergibt sich das Problem, dass ein mobiles Eingabegerät, wie ein Smartphone oder ein Tablet, kein Not-Halt-Befehlsgerät (z.B. eine Not-Halt-Taste) umfasst, das die Anforderungen der Maschinenrichtlinie erfüllt. Somit kann die Not-Halt-Funktion nicht, zumindest aber nicht allein durch das mobile Eingabegerät implementiert werden.

Weiter stellt sich das Problem, eine einfache und sichere Zuordnung zwischen der Baumaschine und dem mobilen Eingabegerät herzustellen, um Fehlbedienungen und daraus resultierende Gefahren zu vermeiden. Insbesondere soll verhindert werden, dass der Benutzer versehentlich über sein mobiles Eingabegerät eine falsche Maschine ansteuert, z.B. falls sich mehrere ähnliche Baumaschinen in der näheren Umgebung befinden, was auf Großbaustellen und Betriebshöfen regelmäßig vorkommt.

Es ist daher eine Aufgabe der Erfindung, eine verbesserte mobile Baumaschine anzugeben, die eine den Sicherheitsanforderungen entsprechende Bedienung mittels eines mobilen Eingabegerätes ermöglicht.

Es ist eine weitere Aufgabe der Erfindung, eine einfache und fehlerunanfällige Zuordnung zwischen der mobilen Baumaschine und dem mobilen Eingabegerät zu ermöglichen.

Ferner soll verhindert werden, dass versehentlich über ein vom Benutzer länger nicht mehr benutztes Eingabegerät eingegebene Benutzerbefehle in Ansteuerungssignale für Maschinenkomponenten umgesetzt werden.

Gelöst wird zumindest eine dieser Aufgaben durch eine mobile Baumaschine mit den Merkmalen des Anspruchs 1 sowie durch ein Verfahren mit den Merkmalen des Anspruchs 9.

Vorteilhafte Ausgestaltungen und Weiterbildungen der Erfindung ergeben sich aus den abhängigen Ansprüchen.

Die Erfindung schlägt eine Überwachungseinrichtung zur Überwachung des mobilen Eingabegeräts nach Maßgabe von vorgegebenen Überwachungskriterien vor, wobei die Überwachungseinrichtung dazu ausgebildet ist, in Abhängigkeit von dem Überwachungsergebnis eine Stopp-Funktion auszulösen. Durch die Überwachungseinrichtung kann die Konformität der Steuerung der mobilen Baumaschine per mobilem Eingabegerät mit der Maschinenrichtlinie hergestellt werden.

Über die Überwachungseinrichtung kann auf einfache Weise überprüft werden, ob das mobile Eingabegerät für die Bedienung der Baumaschine sicher ist. Hierfür überprüft die Überwachungseinrichtung mindestens ein vorgegebenes Überwachungskriterium, welches als unterscheidendes Merkmal zu verstehen ist als Bedingung für den sicheren Betrieb der über das mobile Eingabegerät gesteuerten Baumaschine. Ergibt sich anhand des Überwachungskriteriums, dass eine Gefährdung droht oder bereits besteht, löst die Überwachungseinrichtung eine Stopp-Funktion aus. Die Stopp-Funktion kann darin bestehen, dass die Eingabe der Benutzerbefehle am Eingabegerät und/oder eine Kommunikation der Benutzerbefehle und/oder eine Umsetzung der Benutzerbefehle in Ansteuersignale zumindest teilweise blockiert werden. Ebenso kann die Stopp-Funktion vorsehen, dass zumindest eine Funktion der Baumaschine stillgesetzt wird und/oder ein Not-Halt der Baumaschine ausgelöst wird, wodurch die Maschine in einen sicheren Zustand im Sinne der Maschinenrichtlinie gebracht wird. Insbesondere bei einer Unterbrechung der Kommunikationsverbindung zwischen dem Eingabegerät und der Kommunikationsschnittstelle wird ein Stillsetzen der Maschine ausgelöst. Über die Blockade zumindest einzelner Benutzerbefehle kann sichergestellt werden, dass von der Baumaschine über die Bedienung am mobilen Eingabegerät nicht versehentlich eine Gefährdung ausgeht. Hierzu kann es ausreichen, Benutzerbefehle am Eingabegerät und/oder die Kommunikation der Benutzerbefehle und/oder die Umsetzung der Benutzerbefehle in Ansteuersignale zumindest teilweise zu blockieren.

Erfindungsgemäß ist mindestens ein Identifikationsgeber zur Übergabe von Identifikationsdaten der Baumaschine an das mobile Eingabegerät vorgesehen, wobei die Steuereinheit dazu eingerichtet ist, die Bedienung der Baumaschine in Abhängigkeit von den Identifikationsdaten freizuschalten. Durch die Übergabe von Identifikationsdaten der Baumaschine an das mobile Eingabegerät kann auf einfache Weise die Zuordnung des Eingabegeräte zu dieser Baumaschine sichergestellt werden, indem die Steuereinheit dazu eingerichtet ist, die Bedienung der Baumaschine in Abhängigkeit von den Identifikationsdaten freizuschalten. Nur wenn das Eingabegerät die der Baumaschine zugeordneten Identifikationsdaten erhalten hat, kann die Bedienung dieser Baumaschine erfolgen. Beispielsweise kann vorgesehen sein, dass die Benutzerbefehle zusammen mit den erhaltenen Identifikationsdaten über die Kommunikationsschnittstelle an die Steuereinheit kommuniziert werden. Die Steuereinheit gleicht die so empfangenen Identifikationsdaten mit den hinterlegten Daten der Baumaschine, der die Steuereinheit zugeordnet ist, ab und setzt die Benutzerbefehle nur um, wenn die Identifikationsdaten zu der Baumaschine passen. Ebenso können die Identifikationsdaten einen Schlüssel zur Verschlüsselung der Benutzerbefehle umfassen, wobei die Steuereinheit die Benutzerbefehle nur korrekt entschlüsseln kann, wenn die Verschlüsselung zu einem in der Steuereinheit hinterlegten, maschinenindividuellen Schlüssel korrespondiert. Die versehentliche Bedienung einer falschen Baumaschine kann auf diese Weise ausgeschlossen werden.

Die Funktion des Identifikationsgebers ist zunächst unabhängig von der Funktion der Überwachungseinrichtung, auch wenn die Kombination von Überwachungseinrichtung und Identifikationsgeber tatsächlich vorteilhaft ist, wie sich aus den nachfolgenden Ausführungen ergibt. Die vorliegende Offenbarung offenbart in einem Beispiel, das nicht zur Erfindung gehört, aber einem besseren Verständnis der Erfindung dient auch eine mobile Baumaschine nach dem Oberbegriff von Anspruch 1, bei der nur der Identifikationsgeber mit der zuvor und im Folgenden näher beschriebenen Ausgestaltung und Funktionalität, nicht aber die Überwachungseinrichtung vorgesehen ist.

Bevorzugt ist vorgesehen, dass der Identifikationsgeber eine Near-Field-Communication-(NFC)-Schnittstelle umfasst. Im einfachsten Fall ist diese Near-Field-Communication-(NFC)-Schnittstelle als Transponder (NFC-Tag) ausgebildet. Auf diesem NFC-Tag sind die Identifikationsdaten der Baumaschine abgelegt. Über die Near-Field-Communication-(NFC)-Schnittstelle können die Identifikationsdaten der Baumaschine sehr einfach an das mobile Eingabegerät übergeben werden. Hierzu muss das ebenfalls mit einer Near-Field-Communication-(NFC)-Schnittstelle ausgestattet mobile Eingabegerät vorteilhafterweise lediglich in der Nähe des Identifikationsgebers positioniert werden, sodass über die Near-Field-Communication-(NFC)-Schnittstelle die Identifikationsdaten der Baumaschine an das mobile Eingabegerät übergeben werden. Damit kann die Bedienung der Baumaschine einfach in Abhängigkeit von den Identifikationsdaten für ein in der Nähe des Identifikationsgebers positioniertes, mobiles Eingabegerät freigeschaltet werden. Alternativ kann der Identifikationsgeber auch als QR-Code oder Barcode ausgestaltet sein, der von dem mobilen Eingabegerät eingelesen wird und so die Identifikationsdaten der Baumaschine übergibt. Eine weitere Möglichkeit ist die Ausgestaltung des Identifikationsgebers als RFID-Chip, der die Identifikationsdaten der Baumaschine über einen RFID-Leser am mobilen Eingabegerät an das mobile Eingabegerät übergibt. Der Identifikationsgeber sollte in allen Fällen fest mit der Baumaschine verbunden sein, um Verwechselungen ausschließen zu können.

Besonders bevorzugt ist eine Ausführungsform, die vorsieht, dass die NFC-Schnittstelle dazu ausgebildet ist, das mobile Eingabegerät zur Verbindung mit der Kommunikationsschnittstelle zu authentifizieren. Hierdurch wird das Sicherheitsniveau weiter erhöht. Es wird insbesondere sichergestellt, dass nur bestimmte Eingabegeräte, die vorab ausgewählten, autorisierten Personen zugeordnet sind, zur Bedienung der Baumaschine verwendet werden können. Bevorzugt ist die NFC-Schnittstelle zur Verwendung des aktiven NFC-Modus ausgebildet. So kann der Identifikationsgeber über eine Lesefunktion Daten vom Eingabegerät abrufen, um das mobile Eingabegerät zur Verbindung mit der Kommunikationsschnittstelle zu authentifizieren. Die Steuereinheit kann mit einem so ausgebildeten Identifikationsgeber über eine Datenverbindung gekoppelt sein. Der Identifikationsgeber hat in dieser Ausgestaltung bevorzugt zusätzlich eine eigene Spannungsversorgung. Die Steuereinheit der Baumaschine kann abhängig von den Daten des Eingabegerätes bestimmte Funktionen der Bedienung freigeben, während andere Funktionen, die beispielsweise zur Wartung verwendet werden, nur für bestimmte vorher definierte Eingabegeräte freigegeben werden. Die Daten des Eingabegerätes können über eine Applikation auf dem Gerät zur Verfügung gestellt werden. Möglich wäre auch, dass die NFC-Schnittstelle der Baumaschine von der Steuereinheit zu jeder Übergabe von Identifikationsdaten der Baumaschine neue Identifikationsdaten zugewiesen bekommt.

Die Erfindung sieht vor, dass eines der Überwachungskriterien eine zeitliche Begrenzung ist, und zwar in der Weise, dass
- die Stopp-Funktion nach Ablauf eines vorbestimmten Zeitraums ab Übergabe der Identifikationsdaten ausgelöst wird und/oder
- die Stopp-Funktion ausgelöst wird, nachdem während eines vorbestimmten Zeitraums keine Benutzerbefehle über das mobile Eingabegerät eingegeben wurden. So kann über die zeitliche Begrenzung eine Stopp-Funktion ausgelöst werden, wenn ein vorbestimmter Zeitraum seit der Übergabe der Identifikationsdaten von dem Identifikationsgeber an das mobile Eingabegerät vergangen ist, oder wenn während eines vorbestimmten Zeitraums keine Benutzerbefehle mehr eingegeben wurden. Die zeitliche Begrenzung kann so ausgestaltet sein, dass nach erneuter Übergabe der Identifikationsdaten oder nach einer Eingabe eines Benutzerbefehls über das mobile Eingabegerät der vorbestimmte Zeitraum der zeitlichen Begrenzung erneut beginnt. Hierdurch kann verhindert werden, dass versehentlich über ein vom Benutzer länger nicht mehr benutztes Eingabegerät eingegebene Benutzerbefehle in Ansteuerungssignale für Maschinenkomponenten der Baumaschine umgesetzt werden. Andererseits sorgt der Neubeginn des vorbestimmten Zeitraums ab Übergabe der Identifikationsdaten oder der letzten Eingabe von Benutzerbefehlen für eine einfache und reibungslose Bedienung der Baumaschine über das verbundene mobile Eingabegerät.

Besonders vorteilhaft ist eine Ausführungsform, die vorsieht, dass die Überwachungseinrichtung dazu ausgebildet ist, einen Lichtsensor und/oder Beschleunigungssensor und/oder Lagesensor des mobilen Eingabegerätes zu überwachen, wobei das Überwachungskriterium zulässige Wertebereiche für die Sensorsignale angibt. Auf diese Weise kann eine Stopp-Funktion ausgelöst werden, wenn die Sensorsignale wenigstens eines Sensors nicht in dem zulässigen Wertebereich liegen. Über den Lichtsensor kann so beispielsweise erfasst werden, ob der Benutzer das mobile Eingabegerät in einer Tasche verstaut hat. Über den Lagesensor kann beispielsweise erfasst werden, dass das mobile Eingabegerät am Körper des Benutzers in einer Lage getragen wird, die keine sichere Eingabe von Benutzerbefehlen ermöglicht, sodass die Stopp-Funktion von der Überwachungseinrichtung ausgelöst wird. Anhand der Sensorsignale des Beschleunigungssensors, kann beispielsweise erfasst werden, dass das über die Kommunikationsschnittstelle verbundene Eingabegerät dem Benutzer beispielsweise aus der Hand fällt, sodass über die Überwachungseinrichtung die Eingabe von Benutzerbefehlen oder die Umsetzung in Ansteuersignale für die Maschinenkomponenten der Baumaschine verhindert werden kann. Ebenso können die Schritte des Benutzers gezählt werden. Bei Überschreitung einer bestimmten Schrittzahl kann die Stopp-Funktion automatisch aktiviert werden, um zu verhindern, dass sich der Benutzer zu weit von der Maschine (und damit von dem an der Maschine verbauten Not-Halt-Taster) entfernt und dabei z.B. den sicheren Sichtkontakt zu der Maschine verliert.

Eine vorteilhafte Ausgestaltung sieht vor, dass das Überwachungskriterium einen maximalen Abstand zwischen dem mobilen Eingabegerät und der Baumaschine oder zwischen dem mobilen Eingabegerät und einem an der Baumaschine angeordneten Not-Halt-Taster angibt. Mit der Überprüfung des Abstandes zwischen dem verbundenen Eingabegerät und der Baumaschine oder zwischen dem verbundenen Eingabegerät und einem an der Baumaschine angeordneten Not-Halt-Taster kann sichergestellt werden, dass der Benutzer sich zur Bedienung der mobilen Baumaschine über das mobile Eingabegerät ausreichend nah an der Baumaschine befindet. Wird der Abstand zu einem Not-Halt-Taster als Überwachungskriterium von der Überwachungseinrichtung überwacht, ist sichergestellt, dass der Benutzer jederzeit bei drohender oder eintretender Gefahr den in der Nähe befindlichen Not-Halt-Taster betätigen kann, um die Baumaschine in einen sicheren Zustand zu versetzen.

Gemäß einer bevorzugten Ausgestaltung der Erfindung ist vorgesehen, dass die Überwachungseinrichtung dazu ausgebildet ist, den Abstand mittels Global Positioning System (GPS) und/oder anhand der Signalstärke der Datenverbindung mit der Kommunikationsschnittstelle zu überwachen. Über diese Möglichkeiten der Überwachung kann durch die Überwachungseinrichtung sehr einfach der Abstand zwischen dem mobilen Eingabegerät und der Baumaschine oder zwischen dem mobilen Eingabegerät und einem an der Baumaschine angeordneten Not-Halt-Taster bestimmt werden, um bei Überschreitung eines festgelegten Maximums zumindest für einen dieser Abstände die Stopp-Funktion auszulösen.

Besonders vorteilhaft ist eine Ausführungsform, die vorsieht, dass die Kommunikationsschnittstelle eine Datenverbindung zum mobilen Eingabegerät zur Übertragung von eingegebenen Benutzerbefehlen, insbesondere mittels Bluetooth oder WLAN, bereitstellt. Über eine solche Datenverbindung können die eingegebenen Benutzerbefehle mittels Standardtechnologie, die auf jedem gängigen mobilen Eingabegerät verfügbar ist, an die Kommunikationsschnittstelle übertragen werden.

Eine besonders vorteilhafte Ausführung der Erfindung sieht vor, dass das mobile Eingabegerät ein Smartphone oder ein Tablet-PC ist. Mit einem solchen Eingabegerät ist eine intuitive Bedienung der mobilen Baumaschine möglich, da auf Bedienkonzepte zurückgegriffen werden kann, die dem Benutzer bereits aus der privaten Nutzung seines Smartphones oder seines Tablet-PCs bekannt sind. Vorteilhafterweise ist das mobile Eingabegerät ein vom Benutzer bereits privat genutztes Smartphone oder Tablet, sodass er dies bereits mitführt und zur Bedienung der mobilen Baumaschine nicht auf ein weiteres Gerät angewiesen ist. Die Erfindung ermöglicht somit die Umsetzung eines "Bring Your Own Device"-Konzeptes (BYOD).

Ferner ist Gegenstand der Erfindung ein Verfahren zur Steuerung einer mobilen Baumaschine gemäß dem Anspruch 9.

Wie zuvor beschrieben, wird das mobile Eingabegerät nach Maßgabe von vorgegeben Überwachungskriterien überwacht, wobei in Abhängigkeit vom Überwachungsergebnis, d.h. in Abhängigkeit von dem erfassten Ist-Zustand des mobilen Eingabegerätes im Vergleich von dem durch die Überwachungskriterien festgelegten Soll-Zustand, eine Stopp-Funktion ausgelöst wird. Die Identifikationsdaten der Baumaschine werden über einen an der Baumaschine fest verbauten Identifikationsgeber an das mobile Eingabegerät übergeben. Die Bedienung der Baumaschine wird dann über das mobile Eingabegerät durch eine Steuereinheit der Baumaschine in Abhängigkeit von den Identifikationsdaten freigeschaltet. Eines der Überwachungskriterien sieht eine zeitliche Begrenzung in der Weise vor, dass die Stopp-Funktion nach Ablauf eines vorbestimmten Zeitraums ab Übergabe der Identifikationsdaten ausgelöst wird und/oder die Stopp-Funktion ausgelöst wird, nachdem während eines vorbestimmten Zeitraums keine Benutzerbefehle über das mobile Eingabegerät eingegeben wurden. Die Stopp-Funktion sieht vor, die Steuerung der Baumaschine über das mobile Eingabegerät zumindest teilweise zu unterbinden, insbesondere die Eingabe der Benutzerbefehle am Eingabegerät und/oder eine Kommunikation der Benutzerbefehle und/oder eine Umsetzung der Benutzerbefehle in Ansteuersignale zumindest teilweise zu blockieren, zumindest eine Funktion der Baumaschine stillzusetzen und/oder einen Not-Halt der Baumaschine auszulösen.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäße Baumaschine,
- Figur 2: Nahbedienung der Baumaschine,
- Figur 3: Fernbedienung der Baumaschine und

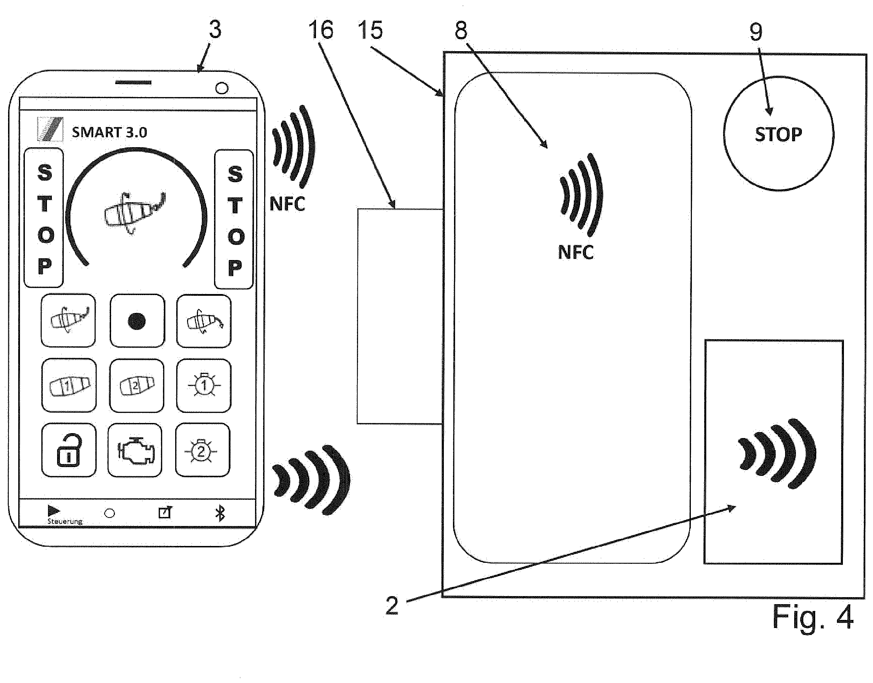

- Figur 4: Eingabegerät und Haltevorrichtung

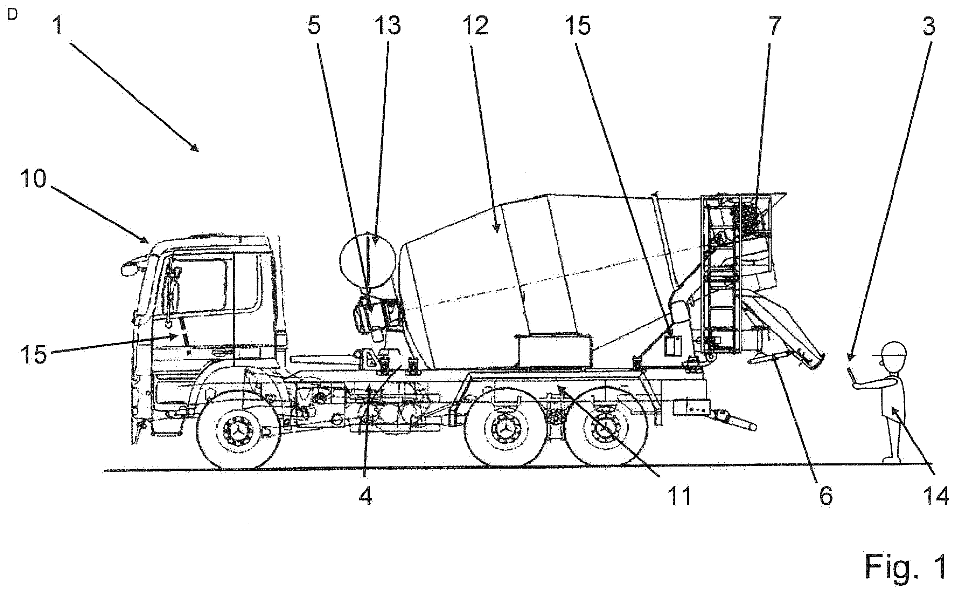

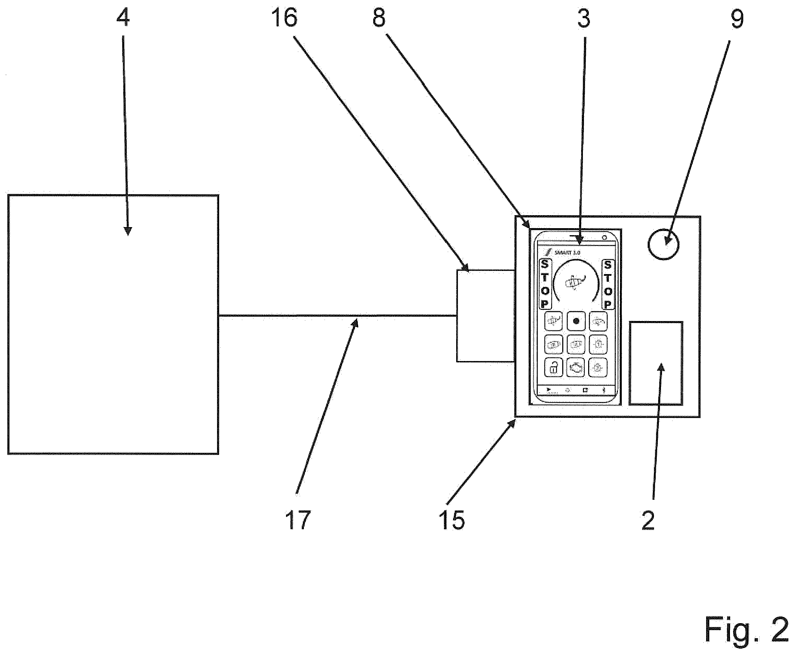

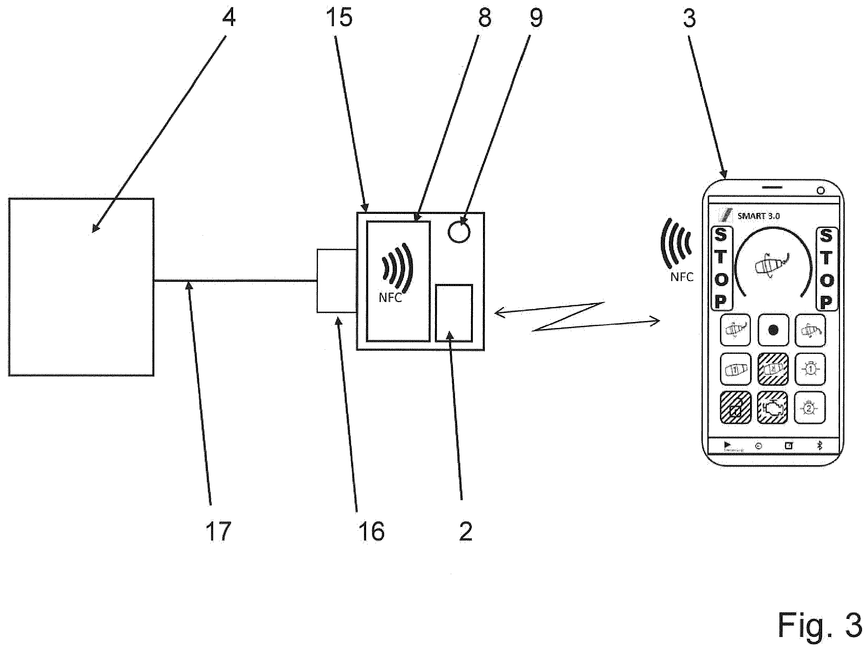

In der Figur 1 mit dem Bezugszeichen 1 bezeichnet ist eine erfindungsgemäße mobile Baumaschine dargestellt. Die Baumaschine 1 gemäß dem in Figur 1 gezeigten Ausführungsbeispiel ist als Fahrmischer 1 ausgebildet. Dieser verfügt über ein Führerhaus 10 und ein Fahrgestell 11 und eine auf dem Fahrgestell 11 aufgebaute über einen Trommelantrieb 5 drehbare Mischtrommel 12. In dieser Mischtrommel 12 kann Frischbeton zu einer Baustelle transportiert werden. Dazu wird der Beton über einen klappbaren Einfülltrichter 7 in die sich drehende Trommel 12 befördert. An der Baustelle angelangt, kann der Beton über eine Drehbewegung der Mischtrommel 12 über eine Schwenkschurre 6 entladen werden. Um den Beton fließfähig zu machen, sind Fahrmischer 1 in der Regel mit einer Fließmittelanlage ausgestattet, die eine Flüssigkeit ausbringt, die bei Zugabe nicht das Mischungsverhältnis von Wasser und Zement ändert. Zur Reinigung der Mischtrommel 12 und der Schwenkschurre 6 nach dem Entleeren des Betons verfügt der Fahrmischer 1 über einen Wassertank 13, der in der Regel 500 bis 700 Liter Wasser fasst. Der gezeigte Fahrmischer 1 verfügt über mindestens eine Kommunikationsschnittstelle 2 (Fig. 2) zur Kommunikation mit einem mobilen Eingabegerät 3. Über dieses mobile Eingabegerät 3 kann der Benutzer 14 Befehle zur Bedienung des Fahrmischers 1 eingeben. Weiterhin verfügt der Fachmischer 1 über eine Steuereinheit 4 (Fig. 2) zur Umsetzung der über das Eingabegerät 3 eingegebenen und über die Kommunikationsschnittstelle 2 (Fig. 2) kommunizierten Benutzerbefehle in Ansteuerungssignale für die einzelnen Maschinenkomponenten, also beispielsweise den Trommelantrieb 5, die Schwenkschurre 6, und den Einfülltrichter 7 des Fahrmischers 1. Der Fahrmischer 1 verfügt über mehrere Identifikationsgeber 8 (Fig. 3) zur Übergabe von Identifikationsdaten des Fahrmischers 1 an das mobile Eingabegerät 3. Diese Identifikationsgeber 8 (Fig. 3) sind in einer bevorzugten Ausgestaltung an Halterungen 15 angeordnet, die an dem Fahrmischer 1 angebracht sind. Im Ausführungsbeispiel gemäß Figur 1 ist an dem Fahrmischer 1 eine solche Halterung 15 im Führerhaus 10 und eine solche Halterung 15 ist auch im Bereich der Schwenkschurre 6 bzw. am hinteren Teil des Fahrgestells 11 angeordnet. Die Halterungen 15 können fest verbaut sein oder über ein Kabel, insbesondere ein Spiralkabel, abnehmbar mit dem Fahrmischer 1 verbunden sein. Je nach Anbauort der Halterung 15 oder des Identifikationsgebers an der Baumaschine 1 können unterschiedliche Benutzerbefehle zur Bedienung der Baumaschine 1 freigeschaltet werden. Bei einer Anbringung der genutzten Halterung 15 oder des genutzten Identifikationsgebers 8 (Fig. 3) im Führerhaus 10 können beispielsweise nur die zur Fahrt nötigen Benutzerbefehle freigeschaltet werden. So können Ansteuerungssignale für die Schwenkschurre 6 oder den Einfülltrichter 7 unterbunden werden, wenn die Halterung 15 im Führerhaus 10 oder ein Identifikationsgeber 8 (Fig. 3) im Führerhaus 10 zur Freischaltung des mobilen Eingabegerätes 3 verwendet wurde. Bei Antippen, Schwenken oder Darüberziehen des mobilen Eingabegerätes 3 am Identifikationsgeber am Heck des Fahrmischers 1 befindet sich der Benutzer 14 des mobilen Eingabegerätes 3 im Sichtbereich des Gefährdungsbereiches von Einfülltrichter 7 und Schwenkschurre 6. Daher wird die Ansteuerung der Schwenkschurre 6 und des Einfülltrichters 7 bevorzugt nur mit einer zeitlichen Begrenzung freigegeben, wenn zur Übergabe der Identifikationsdaten ein Identifikationsgeber 8 (Fig. 3) am Heck des Fahrmischers 1 verwendet wurde. Bei der Verwendung von NFC-Tags 8 (Fig. 3) mit unterschiedlichen Tokens, beispielsweise im Führerhaus 10 und im hinteren Bereich der Maschine 1, werden die Benutzerbefehle am mobilen Eingabegerät 3 vorteilhafterweise gezielt aktiviert, so dass der Benutzer 14 beispielsweise die Schwenkschurre 6 nicht nach Übergabe der Identifikationsdaten von einem Tag 8 (Fig. 3) aus dem Führerhaus 10 aus steuern kann.

In Figur 2 ist eine Halterung 15 in einer Detailansicht zu sehen. Zu erkennen ist, dass die Halterung 15 neben dem Identifikationsgeber 8 auch vorteilhafterweise eine Kommunikationsschnittstelle 2 zur Kommunikation mit einem mobilen Eingabegerät 3 aufweist. Die hier gezeigte Halterung 15 ist über eine Datenschnittstelle 16 und eine Datenleitung 17 mit der Steuereinheit 4 des Fahrmischers 1 verbunden. Die Datenschnittstelle 16 kann bevorzugt als CAN-Bus-Umsetzer ausgebildet sein und die Datenleitung 17 kann als CAN-BusSystem ausgebildet sein. CAN-Bus, also genauer Controller Area Network Datenbus, stellt einen heute üblichen Datenbus für Steuerungssignale bei LKWs und mobilen Arbeitsmaschinen dar. Die bevorzugt hierüber angebundene Steuereinheit 4 ist vorteilhafterweise dazu eingerichtet, die Bedienung der Baumaschine 1 in Abhängigkeit von den Identifikationsdaten freizuschalten, die der Fahrmischers 1 an das mobile Eingabegerät 3 übergibt. Diese Identifikationsdaten werden vorteilhafterweise zunächst vom Eingabegerät 3 über die Kommunikationsschnittstelle 2 an die Steuereinheit 4 des Fahrmischers 1 gesendet. Die Steuereinheit 4 gleicht die gesendeten mit den ausgegebenen Identifikationsdaten ab und schickt dem Eingabegerät 3 ein Freigabesignal, so dass eine Applikation auf dem Eingabegerät 3 alle oder zumindest die freigegebenen Funktionen aufrufbar macht. Je nach Sicherheitsanforderung können bei der Steuerung über die Kommunikationsschnittstelle 2 einzelne Ansteuerungssignale deaktiviert sein.

Eine weitere Möglichkeit ist, dass das mobile Eingabegerät 3 dazu eingerichtet ist, die Bedienung der Baumaschine 1 in Abhängigkeit von den übergebenen Identifikationsdaten freizuschalten. Zur Übergabe der Identifikationsdaten ist der Identifikationsgeber 8 bevorzugt als Near-Field-Communication-(NFC)-Schnittstelle 8 ausgebildet. In der in Figur 2 gezeigten Positionierung ist das mobile Eingabegerät 3 in der Halterung 15 des Fahrmischers 1 aufgenommen. In dieser Position kann das mobile Eingabegerät 3 über eine Near-Field-Communication-(NFC)-Schnittstelle des Eingabegeräts 3 die Identifikationsdaten der Baumaschine 1 übernehmen, indem diese über die Near-Field-Communication-(NFC)-Schnittstellen kommuniziert werden. Mit der Aufnahme in der Halterung 15 des Fahrmischers 1 kann das mobile Eingabegerät 3 sicher der mobilen Baumaschine 1 zugeordnet werden, da die NFC-Schnittstell nur eine begrenzte Reichweite aufweist, sodass eine versehentliche Verbindung des mobilen Eingabegeräts 3 zur Kommunikation über die Kommunikationsschnittstelle 2 verhindert werden kann.

Neben der Aufnahme des mobilen Eingabegerätes 3 in der Halterung 15 des Fahrmischers 1 soll es auch möglich sein, die Baumaschine 1 über das mobile Eingabegerät 3 fernzusteuern. Hierzu muss das mobile Eingabegerät 3 vorteilhafterweise lediglich zur Übergabe der Identifikationsdaten der Baumaschine 1 an dem als NFC-Schnittstelle ausgebildeten Identifikationsgeber 8 vorbeigestreift oder kurz vorgehalten werden. Bevorzugt ist die NFC-Schnittstelle 8 dazu ausgebildet, das mobile Eingabegerät 3 zur Verbindung mit der Kommunikationsschnittstelle 2 zu authentifizieren. So verfügt der Identifikationsgeber 8 vorteilhafterweise über eine Lesefunktion, um Daten von dem Eingabegerät 3 abzurufen und um das mobile Eingabegerät 3 zur Verbindung mit der Kommunikationsschnittstelle 2 zu authentifizieren. Nach Übergabe der Identifikationsdaten kann die Steuereinheit 4 oder das mobile Eingabegerät 3 in Abhängigkeit von den übergebenen Identifikationsdaten die Bedienung der Baumaschine 1 freigeben. Grundvoraussetzung für die Freischaltung der Bedienung auf dem Eingabegerät 3 ist also, dass über die NFC-Schnittstelle 8 die Identifikationsdaten der Baumaschine 1 übergeben wurden. So können auf dem mobilen Eingabegerät 3 benutzerseitig eingegebene Benutzerbefehle zur Bedienung der Baumaschine 1 und über die Kommunikationsschnittstelle 2 kommunizierte Benutzerbefehle von der Steuereinheit 4 in Ansteuerungssignale für die Maschinenkomponenten 5, 6, 7 der Baumaschine 1 umgesetzt werden. So kann beispielsweise die Drehzahl und Drehrichtung der Mischtrommel 12 über das mobile Eingabegerät 3 vom Benutzer 14 geändert werden, da die Eingaben am verbundenen und freigeschalteten Eingabegerät 3 in Ansteuerungssignale für den Trommelantrieb 12 umgesetzt werden. Weiterhin kann die Position des Einfülltrichters 7 oder der Schwenkschurre 6 über Benutzereingaben am Eingabegerät 3 geändert werden, da die Benutzerbefehle über die Kommunikationsschnittstelle 2 kommuniziert und von der Steuereinheit 4 in Ansteuerungssignale für den Einfülltrichter 7 oder die Schwenkschurre 6 bzw. in Ansteuerungssignale für mit den Maschinenkomponenten 6, 7 jeweils gekoppelte Schwenkantriebe umgesetzt werden. Der Fahrmischer 1 verfügt über eine durch Software implementierte Überwachungseinrichtung zur Überwachung des mobilen Eingabegeräts 3. Diese Überwachungseinrichtung kann eine Stopp-Funktion auslösen, wenn zumindest ein vorgegebenes Überwachungskriterium greift. Eines dieser Überwachungskriterien ist vorteilhafterweise ein maximaler Abstand zwischen dem mobilen Eingabegerät 3 und der Baumaschine 1, besonders bevorzugt ein maximaler Abstand zwischen dem mobilen Eingabegerät 3 und einem an der Baumaschine 1 angeordneten Not-Halt-Taster 9. An der in den Figuren gezeigten Halterung 15 ist vorteilhafterweise ein solcher Not-Halt-Taster 9 angeordnet. Auf diese Weise ist der Not-Halt-Taster 9 bei der Aufnahme des mobilen Eingabegerätes 3 in der dafür vorgesehenen Halterung 15 unmittelbar neben dem so positionierten Eingabegerät 3 angeordnet und kann umgehend ausgelöst werden, um die Baumaschine 1 in einen sicheren Zustand versetzen. Mit der Verkabelung der Halterung 15 über die Datenleitung 17 ist der Not-Halt-Taster 9 auch zuverlässig mit der Steuereinheit 4 verbunden, um bei Betätigung im Notfall die Baumaschine 1 in einen sicheren Zustand zu versetzen. Alle Funktionen eines Fahrmischers 1, bei denen ein Mensch zu Schaden kommen kann, z.B. durch das Einklemmen von Gliedmaßen, müssen abgesichert sein. Zu diesen sicherheitsrelevanten Funktionen bei einem Fahrmischer 1 gehören bspw. die hydraulische Schurrenverstellung oder die Betätigung des klappbaren Einfülltrichters 7. Ist das Eingabegerät 3 aus der Halterung 15 genommen, um die Baumaschine 1 fernzusteuern, kann die Maschine 1 auch über eine Applikation auf dem Eingabegerät 3 in den sicheren Zustand versetzt werden. Falls diese Applikation nicht funktioniert, muss der an der Halterung 15 vorgesehene Not-Halt-Taster 9 für den Benutzer 14 in erreichbarer Nähe sein, da die Bedienoberfläche eines Smartphones oder eines Tablets für eine sichere Betätigung eines Not-Halts nicht geeignet ist, zudem genügt die drahtlose Verbindung über die Kommunikationsschnittstelle 2 ggf. nicht den Vorschriften für eine sichere Übertragung eines Not-Halt-Signals. Daher wird vorteilhafterweise der Abstand zwischen mobilen Eingabegerät 3 und dem an der Halterung 15 angeordneten Not-Halt-Taster 9 mittels Global Positioning System (GPS) und/oder anhand der Signalstärke der Datenverbindung mit der Kommunikationsschnittstelle 2 überwacht. Der Not-Halt-Taster 9 muss nicht notwendigerweise ein Teil der Halterung 15 sein. Er kann auch separat in unmittelbarer Nähe zur Halterung 15 angeordnet sein.

### Bezugszeichenliste

1 Baumaschine
2 Kommunikationsschnittstelle
3 Eingabegerät
4 Steuereinheit
5 Trommelantrieb (Maschinenkomponente)
6 Schwenkschurre (Maschinenkomponente)
7 Einfülltrichter (Maschinenkomponente)
8 Identifikationsgeber (NFC-Schnittstelle)
9 Not-Halt-Taster
10 Führerhaus
11 Fahrgestell
12 Mischtrommel
13 Wassertank
14 Benutzer
15 Halterung
16 Datenschnittstelle
17 Datenleitung

## Patentansprüche

1. Mobile Baumaschine (1) mit
- wenigstens einer Kommunikationsschnittstelle (2) zur Kommunikation mit einem mobilen Eingabegerät (3) zur benutzerseitigen Eingabe von Benutzerbefehlen zur Bedienung der Baumaschine (1), und
- wenigstens einer Steuereinheit (4) zur Umsetzung der über das Eingabegerät (3) eingegebenen und über die Kommunikationsschnittstelle (2) kommunizierten Benutzerbefehle in Ansteuerungssignale für Maschinenkomponenten (5, 6, 7) der Baumaschine (1), wenigstens einer Überwachungseinrichtung zur Überwachung des mobilen Eingabegeräts (3) nach Maßgabe von vorgegebenen Überwachungskriterien, wobei die Überwachungseinrichtung dazu ausgebildet ist, in Abhängigkeit von dem Überwachungsergebnis eine Stopp-Funktion auszulösen,
**gekennzeichnet durch,**
mindestens einen Identifikationsgeber (8) zur Übergabe von Identifikationsdaten der Baumaschine (1) an das mobile Eingabegerät (3), wobei die Steuereinheit (4) dazu eingerichtet ist, die Bedienung der Baumaschine (1) in Abhängigkeit von den Identifikationsdaten freizuschalten, wobei eines der Überwachungskriterien eine zeitliche Begrenzung in der Weise vorsieht, dass die Stopp-Funktion nach Ablauf eines vorbestimmten Zeitraums ab Übergabe der Identifikationsdaten ausgelöst wird und/oder die Stopp-Funktion ausgelöst wird, nachdem während eines vorbestimmten Zeitraums keine Benutzerbefehle über das mobile Eingabegerät (3) eingegeben wurden, wobei die Stopp-Funktion vorsieht, die Eingabe der Benutzerbefehle am Eingabegerät (3) und/oder eine Kommunikation der Benutzerbefehle und/oder eine Umsetzung der Benutzerbefehle in Ansteuersignale zumindest teilweise zu blockieren, zumindest eine Funktion der Baumaschine (1) stillzusetzen und/oder einen Not-Halt der Baumaschine (1) auszulösen.

2. Baumaschine (1) nach Anspruch 1, **dadurch gekennzeichnet, dass** der Identifikationsgeber (8) eine Near-Field-Communication-(NFC)-Schnittstelle (8) umfasst.

3. Baumaschine (1) nach Anspruch 2, **dadurch gekennzeichnet, dass** die NFC-Schnittstelle (8) dazu ausgebildet ist, das mobile Eingabegerät (3) zur Verbindung mit der Kommunikationsschnittstelle (2) zu authentifizieren.

4. Baumaschine (1) nach einem der Ansprüche 1 bis 3, **dadurch gekennzeichnet, dass** die Überwachungseinrichtung dazu ausgebildet ist, einen Lichtsensor und/oder Beschleunigungssensor und/oder Lagesensor des mobilen Eingabegerätes (3) zu überwachen, wobei das Überwachungskriterium zulässige Wertebereiche für die Sensorsignale angibt.

5. Baumaschine (1) nach einem der Ansprüche 1 bis 4, **dadurch gekennzeichnet, dass** das Überwachungskriterium einen maximalen Abstand zwischen dem mobilen Eingabegerät (3) und der Baumaschine (1) oder zwischen dem mobilen Eingabegerät (3) und einem an der Baumaschine (1) angeordneten Not-Halt-Taster (9) angibt.

6. Baumaschine (1) nach Anspruch 5, **dadurch gekennzeichnet, dass** die Überwachungseinrichtung dazu ausgebildet ist, den Abstand mittels Global Positioning System (GPS) und/oder anhand der Signalstärke der Datenverbindung mit der Kommunikationsschnittstelle (2) zu überwachen.

7. Baumaschine (1) nach einem der vorhergehenden Ansprüche, **dadurch gekennzeichnet, dass** die Kommunikationsschnittstelle (2) eine Datenverbindung zum mobilen Eingabegerät (3) zur Übertragung von eingegebenen Benutzerbefehlen, insbesondere mittels Bluetooth oder WLAN, bereitstellt.

8. Baumaschine (1) nach einem der Ansprüche 1 bis 7, **dadurch gekennzeichnet, dass** das mobile Eingabegerät (3) ein Smartphone oder ein Tablet-PC ist.

9. Verfahren zur Steuerung einer mobilen Baumaschine (1), wobei Benutzerbefehle zur Bedienung der mobilen Baumaschine über ein mobiles Eingabegerät (3) eingegeben werden und die Benutzerbefehle in Ansteuerungssignale zur Ansteuerung von Maschinenkomponenten (5, 6, 7) der Baumaschine (1) umgesetzt werden, wobei das mobile Eingabegerät (3) nach Maßgabe von vorgegebenen Überwachungskriterien überwacht wird, wobei in Abhängigkeit vom Überwachungsergebnis eine Stopp-Funktion ausgelöst wird,
**dadurch gekennzeichnet,**
**dass** Identifikationsdaten der Baumaschine (1) über einen an der Baumaschine (1) fest verbauten Identifikationsgeber (8) an das mobile Eingabegerät (3) übergeben werden, wonach die Bedienung der Baumaschine (1) über das mobile Eingabegerät durch eine Steuereinheit (4) der Baumaschine (1) in Abhängigkeit von den Identifikationsdaten freigeschaltet wird, wobei eines der Überwachungskriterien eine zeitliche Begrenzung in der Weise vorsieht, dass die Stopp-Funktion nach Ablauf eines vorbestimmten Zeitraums ab Übergabe der Identifikationsdaten ausgelöst wird und/oder die Stopp-Funktion ausgelöst wird, nachdem während eines vorbestimmten Zeitraums keine Benutzerbefehle über das mobile Eingabegerät (3) eingegeben wurden, wobei die Stopp-Funktion vorsieht, die Steuerung der Baumaschine über das mobile Eingabegerät (3) zumindest teilweise zu unterbinden, insbesondere die Eingabe der Benutzerbefehle am Eingabegerät (3) und/oder eine Kommunikation der Benutzerbefehle und/oder eine Umsetzung der Benutzerbefehle in Ansteuersignale zumindest teilweise zu blockieren, zumindest eine Funktion der Baumaschine (1) stillzusetzen und/oder einen Not-Halt der Baumaschine (1) auszulösen.

10. Verfahren nach Anspruch 9, **dadurch gekennzeichnet, dass** das mobile Eingabegerät vor der Freischaltung authentifiziert wird.

11. Verfahren nach Anspruch 9 oder 10, **dadurch gekennzeichnet, dass** die Stopp-Funktion ausgelöst wird, wenn das Sensorsignal eines Lichtsensors und/oder Beschleunigungssensors und/oder Lagesensors des mobilen Eingabegerätes (3) einen zulässigen Wertebereich verlässt.

12. Verfahren nach einem der Ansprüche 9 bis 11, **dadurch gekennzeichnet, dass** die Stopp-Funktion ausgelöst wird, wenn ein maximaler Abstand zwischen dem mobilen Eingabegerät (3) und der Baumaschine (1) oder zwischen dem mobilen Eingabegerät (3) und einem an der Baumaschine (1) angeordneten Not-Halt-Taster (9) überschritten wird.

## Claims

1. Mobile construction machine (1) having
- at least one communication interface (2) for communication with a mobile input device (3) for user input of user commands for operating the construction machine (1), and
- at least one control unit (4) for converting the user commands entered via the input device (3) and communicated via the communication interface (2) into control signals for machine components (5, 6, 7) of the construction machine (1),
- at least one monitoring device for monitoring the mobile input device (3) in accordance with predefined monitoring criteria, wherein the monitoring device is designed to trigger a stop function depending on the monitoring result,
**characterised by**
at least one identification transmitter (8) for transferring identification data of the construction machine (1) to the mobile input device (3), wherein the control unit (4) is configured to enable the operation of the construction machine (1) depending on the identification data, wherein one of the monitoring criteria provides a time limit in such a way that the stop function is triggered after a predetermined period of time has elapsed from the transfer of the identification data and/or the stop function is triggered after no user commands have been entered via the mobile input device (3) for a predetermined period of time, wherein the stop function provides for at least partially blocking the input of the user commands at the input device (3) and/or communication of the user commands and/or conversion of the user commands into control signals, stopping at least one function of the construction machine (1) and/or triggering an emergency stop of the construction machine (1).

2. Construction machine (1) according to claim 1, **characterised in that** the identification transmitter (8) comprises a near-field communication (NFC) interface (8).

3. Construction machine (1) according to claim 2, **characterised in that** the NFC interface (8) is designed to authenticate the mobile input device (3) for connection to the communication interface (2).

4. Construction machine (1) according to any one of claims 1 to 3, **characterised in that** the monitoring device is designed to monitor a light sensor and/or acceleration sensor and/or position sensor of the mobile input device (3), wherein the monitoring criterion specifies permissible value ranges for the sensor signals.

5. Construction machine (1) according to any one of claims 1 to 4, **characterised in that** the monitoring criterion specifies a maximum distance between the mobile input device (3) and the construction machine (1) or between the mobile input device (3) and an emergency stop button (9) arranged on the construction machine (1).

6. Construction machine (1) according to claim 5, **characterised in that** the monitoring device is designed to monitor the distance using a global positioning system (GPS) and/or using the signal strength of the data connection with the communication interface (2).

7. Construction machine (1) according to any one of the preceding claims, **characterised in that** the communication interface (2) provides a data connection to the mobile input device (3) for monitoring input user commands, in particular using Bluetooth or WLAN.

8. Construction machine (1) according to any one of claims 1 to 7, **characterised in that** the mobile input device (3) is a smart phone or a tablet PC.

9. Method for controlling a mobile construction machine (1), wherein user commands are input via a mobile input device (3) for operating the mobile construction machine and the user commands are converted into control signals for controlling machine components (5, 6, 7) of the construction machine (1), wherein the mobile input device (3) is monitored in accordance with predetermined monitoring criteria, wherein a stop function is triggered depending on the monitoring result,
**characterised in that**
identification data of the construction machine (1) is transferred to the mobile input device (3) via an identification transmitter (8) permanently installed on the construction machine (1), whereupon operation of the construction machine (1) via the mobile input device is enabled by a control unit (4) of the construction machine (1) depending on the identification data, wherein one of the monitoring criteria provides a time limit in such a way that the stop function is triggered after a predetermined period of time has elapsed from the transfer of the identification data and/or the stop function is triggered after no user commands have been entered via the mobile input device (3) for a predetermined period of time, wherein the stop function provides for at least partially preventing the control of the construction machine via the mobile input device (3), in particular at least partially blocking the input of the user commands at the input device (3) and/or communication of the user commands and/or conversion of the user commands into control signals, stopping at least one function of the construction machine (1) and/or triggering an emergency stop of the construction machine (1).

10. Method according to claim 9, **characterised in that** the mobile input device is authenticated before activation.

11. Method according to claim 9 or 10, **characterised in that** the stop function is triggered when the sensor signal of a light sensor and/or acceleration sensor and/or position sensor of the mobile input device (3) leaves a permissible value range.

12. Method according to any one of claims 9 to 11, **characterised in that** the stop function is triggered when a maximum distance between the mobile input device (3) and the construction machine (1) or between the mobile input device (3) and an emergency stop button (9) arranged on the construction machine (1) is exceeded.

## Revendications

1. Machine de construction mobile (1) avec
- au moins une interface de communication (2) pour la communication avec un appareil d'entrée mobile (3) pour l'entrée côté utilisateur d'instructions d'utilisateur pour la commande de la machine de construction (1), et
- au moins une unité de commande (4) pour la conversion des instructions d'utilisateur entrées via l'appareil d'entrée (3) et communiquées via l'interface de communication (2) en signaux de commande pour des composants de machine (5, 6, 7) de la machine de construction (1),
- au moins un dispositif de surveillance pour surveiller l'appareil d'entrée mobile (3) conformément à des critères de surveillance prédéfinis, le dispositif de surveillance étant configuré pour déclencher une fonction d'arrêt en fonction du résultat de la surveillance,
**caractérisée par**
au moins un transmetteur d'identification (8) pour transmettre des données d'identification de la machine de construction (1) à l'appareil d'entrée mobile (3), l'unité de commande (4) étant adaptée pour déverrouiller la commande de la machine de construction (1) en fonction des données d'identification, l'un des critères de surveillance prévoyant une limitation dans le temps de telle manière que la fonction d'arrêt est déclenchée après l'écoulement d'une période prédéterminée à partir de la transmission des données d'identification et/ou la fonction d'arrêt est déclenchée après qu'aucune instruction d'utilisateur n'a été entrée via l'appareil d'entrée mobile (3) pendant une période prédéterminée, la fonction d'arrêt prévoyant de bloquer au moins partiellement l'entrée des instructions d'utilisateur sur l'appareil d'entrée (3) et/ou une communication des instructions d'utilisateur et/ou une conversion des instructions d'utilisateur en signaux de commande, d'arrêter au moins une fonction de la machine de construction (1) et/ou de déclencher un arrêt d'urgence de la machine de construction (1).

2. Machine de construction (1) selon la revendication 1, **caractérisée en ce que** le transmetteur d'identification (8) comprend une interface (8) de communication en champ proche (NFC).

3. Machine de construction (1) selon la revendication 2, **caractérisée en ce que** l'interface NFC (8) est configurée pour authentifier l'appareil d'entrée mobile (3) pour la connexion à l'interface de communication (2).

4. Machine de construction (1) selon l'une quelconque des revendications 1 à 3, **caractérisée en ce que** le dispositif de surveillance est configuré pour surveiller un capteur de lumière et/ou un capteur d'accélération et/ou un capteur de position de l'appareil d'entrée mobile (3), le critère de surveillance indiquant des plages de valeurs autorisées pour les signaux du capteur.

5. Machine de construction (1) selon l'une quelconque des revendications 1 à 4, **caractérisée en ce que** le critère de surveillance indique une distance maximale entre l'appareil d'entrée mobile (3) et la machine de construction (1) ou entre l'appareil d'entrée mobile (3) et un bouton d'arrêt d'urgence (9) agencé sur la machine de construction (1).

6. Machine de construction (1) selon la revendication 5, **caractérisée en ce que** le dispositif de surveillance est configuré pour surveiller la distance au moyen du système de positionnement global (GPS) et/ou à l'aide de l'intensité du signal de la liaison de données avec l'interface de communication (2).

7. Machine de construction (1) selon l'une quelconque des revendications précédentes, **caractérisée en ce que** l'interface de communication (2) fournit une liaison de données avec l'appareil d'entrée mobile (3) pour la transmission d'instructions d'utilisateur entrées, notamment par Bluetooth ou WLAN.

8. Machine de construction (1) selon l'une quelconque des revendications 1 à 7, **caractérisée en ce que** l'appareil d'entrée mobile (3) est un smartphone ou une tablette PC.

9. Procédé de commande d'une machine de construction mobile (1), des instructions d'utilisateur pour la commande de la machine de construction mobile étant entrées via un appareil d'entrée mobile (3) et les instructions d'utilisateur étant converties en signaux de commande pour la commande de composants de machine (5, 6, 7) de la machine de construction (1), l'appareil d'entrée mobile (3) étant surveillé conformément à des critères de surveillance prédéfinis, une fonction d'arrêt étant déclenchée en fonction du résultat de la surveillance,
**caractérisé en ce que**
des données d'identification de la machine de construction (1) sont transmises à l'appareil d'entrée mobile (3) via un transmetteur d'identification (8) monté de manière fixe sur la machine de construction (1), après quoi la commande de la machine de construction (1) via l'appareil d'entrée mobile est déverrouillée par une unité de commande (4) de la machine de construction (1) en fonction des données d'identification, l'un des critères de surveillance prévoyant une limitation dans le temps de telle manière que la fonction d'arrêt est déclenchée après l'écoulement d'une période prédéterminée à partir de la transmission des données d'identification et/ou la fonction d'arrêt est déclenchée après qu'aucune instruction d'utilisateur n'a été entrée via l'appareil d'entrée mobile (3) pendant une période prédéterminée, la fonction d'arrêt prévoyant d'empêcher au moins partiellement la commande de la machine de construction via l'appareil d'entrée mobile (3), notamment de bloquer au moins partiellement l'entrée des instructions d'utilisateur sur l'appareil d'entrée (3) et/ou une communication des instructions d'utilisateur et/ou une conversion des instructions d'utilisateur en signaux de commande, d'arrêter au moins une fonction de la machine de construction (1) et/ou de déclencher un arrêt d'urgence de la machine de construction (1).

10. Procédé selon la revendication 9, **caractérisé en ce que** l'appareil d'entrée mobile est authentifié avant le déverrouillage.

11. Procédé selon la revendication 9 ou 10, **caractérisé en ce que** la fonction d'arrêt est déclenchée lorsque le signal de capteur d'un capteur de lumière et/ou d'un capteur d'accélération et/ou d'un capteur de position de l'appareil d'entrée mobile (3) sort d'une plage de valeurs autorisées.

12. Procédé selon l'une quelconque des revendications 9 à 11, **caractérisé en ce que** la fonction d'arrêt est déclenchée lorsqu'une distance s maximale entre l'appareil d'entrée mobile (3) et la machine de construction (1) ou entre l'appareil d'entrée mobile (3) et un bouton d'arrêt d'urgence (9) agencé sur la machine de construction (1) est dépassée.
